# EUROPÄISCHE PATENTSCHRIFT

(11) **EP 2 934 973 B1**
(45) Veröffentlichungstag und Bekanntmachung des Hinweises auf die Patenterteilung: **04.01.2017**
(21) Anmeldenummer: 13795793.2
(22) Anmeldetag: 28.11.2013
(51) Int. Cl.: B60T 13/74, B60T 8/42, B60T 8/44, B60W 10/18

(54) **ELEKTROHYDRAULISCHE FAHRZEUG-BREMSANLAGE UND VERFAHREN ZUM BETREIBEN DERSELBEN**
ELECTROHYDRAULIC MOTOR VEHICLE BRAKE SYSTEM AND METHOD FOR OPERATING THE SAME
SYSTÈME DE FREINAGE ÉLECTROHYDRAULIQUE POUR VÉHICULE ET PROCÉDÉ DE FONCTIONNEMENT

(30) Priorität: 21.12.2012 DE 102012025249
(43) Veröffentlichungstag der Anmeldung: 28.10.2015
(73) Patentinhaber: Lucas Automotive GmbH, 56070 Koblenz (DE)
(72) Erfinder: KNECHTGES, Josef, 56727 Mayen (DE); WAGNER, Thomas, 56179 Vallendar (DE)
(74) Vertreter: Röthinger, Rainer
(86) Internationale Anmeldenummer: PCT/EP2013/074927
(87) Internationale Veröffentlichungsnummer: WO 2014/095286

(56) Entgegenhaltungen:
- WO-A1-2006/111393
- WO-A1-2012/152352
- WO-A2-2011/132074
- DE-A1- 10 338 046
- DE-A1-102007 016 862
- DE-A1-102010 024 734
- DE-A1-102010 038 555
- DE-A1-102010 042 694
- DE-A1-102010 055 044

## Beschreibung

### Technisches Gebiet

Die vorliegende Offenbarung betrifft allgemein das Gebiet der Fahrzeug-Bremsanlagen. Konkret wird eine elektrohydraulische Fahrzeug-Bremsanlage mit einem elektromechanischen Aktuator zur Betätigung der Bremsanlage beschrieben.

### Hintergrund

Elektromechanische Aktuatoren finden bereits seit geraumer Zeit in Fahrzeug-Bremsanlagen Verwendung, beispielsweise zur Realisierung einer elektrischen Parkbremsfunktion (EPB). Bei elektromechanischen Bremsanlagen (EMB) ersetzen sie die herkömmlichen Hydraulikzylinder an den Radbremsen.

Aufgrund technischer Fortschritte hat sich die Leistungsfähigkeit der elektromechanischen Aktuatoren fortlaufend erhöht. Es wurde daher in Erwägung gezogen, derartige Aktuatoren auch zur Implementierung moderner Fahrdynamikregelsysteme heranzuziehen. Zu solchen Regelsystemen zählen ein Antiblockiersystem (ABS), eine Antriebsschlupfregelung (ASR) und ein elektronisches Stabilitätsprogramm (ESP), auch als Fahrzeugstabilitätsregelung (Vehicle Stability Control, VSC) bezeichnet.

Die WO 2006/111393 A lehrt eine elektrohydraulische Bremsanlage mit einem hochdynamischen elektromechanischen Aktuator, der die Druckmodulation im Fahrdynamikregelbetrieb übernimmt. Der in der WO 2006/111393 A beschriebene elektromechanische Aktuator ist dazu vorgesehen, direkt auf einen Hauptzylinder der Bremsanlage einzuwirken. Aufgrund der hohen Dynamik des elektromechanischen Aktuators lassen sich die hydraulischen Komponenten der aus der WO 2006/111393 A bekannten Bremsanlage auf ein einziges 2/2-Wege-Ventil pro Radbremse reduzieren. Zur Realisierung radindividueller Druckmodulationen werden die Ventile dann einzeln oder gruppenweise im Multiplex-Betrieb angesteuert.

Aus der Minimierung auf lediglich ein Ventil pro Radbremse resultieren jedoch auch Herausforderungen, wie ein ungewollter Druckausgleich bei gleichzeitig geöffneten Ventilen. Eine Lösung basierend auf einem hochdynamischen Regelverhalten hierfür wird in der WO 2010/091883 A angegeben.

Die WO 2010/091883 A offenbart eine elektrohydraulische Bremsanlage mit einem Hauptzylinder und einem darin aufgenommenen Tandemkolben. Der Tandemkolben ist mittels eines elektromechanischen Aktuators betätigbar. Der elektromechanische Aktuator umfasst einen konzentrisch zum Tandemkolben angeordneten Elektromotor sowie eine Getriebeanordnung, die eine Rotationsbewegung des Elektromotors in eine Translationsbewegung des Kolbens umsetzt. Die Getriebeanordnung besteht aus einem Kugelgewindetrieb mit einer drehfest mit einem Rotor des Elektromotors gekoppelten Kugelgewindemutter und einer auf den Tandemkolben einwirkenden Kugelgewindespindel.

Eine weitere elektrohydraulische Bremsanlage mit einem auf einen Hauptzylinder-Kolben wirkenden elektromechanischen Aktuator ist aus der WO 2012/152352 A bekannt. Diese Anlage kann in einem regenerativen Modus (Generatorbetrieb) arbeiten.

Die Druckschrift WO 2012/152352 A1 lehrt eine hydraulische Fahrzeug-Bremsanlage, die einen Hauptzylinder mit wenigstens einen darin verschieblich aufgenommenen Kolben, einen mit einem Bremspedal gekoppelten oder koppelbaren mechanischen Aktuator zur Betätigung des Kolbens sowie einen elektromechanischen Aktuator umfasst. Der elektromechanische Aktuator ist ebenfalls zur Betätigung des Kolbens vorgesehen und ist zumindest zur Bremskraftverstärkung oder Bremskrafterzeugung bei einer Betätigung des Bremspedals ansteuerbar. Ferner ist eine Ventilanordnung vorgesehen, die pro Radbremse ein erstes Ventil zum selektiven Abkoppeln der Radbremse vom Hauptzylinder und ein zweites Ventil zum selektiven Bremsdruckabbau an der Radbremse besitzt. Die Ventilanordnung ist dabei zumindest im Rahmen eines ABS-Regelbetriebs ansteuerbar.

Die Druckschrift DE 10 2010 024 734 A1 lehrt einen pneumatischen Pedalsimulator, umfassend ein Gehäuse mit einer Kompressionskammer, eine Einrichtung zur Verminderung des Raumvolumens der Kompressionskammer und eine Schaltventileinrichtung, über die die Kompressionskammer mit der Außenumgebung koppelbar und gegen diese absperrbar ist.

Die Druckschrift DE 10 2010 042 694 A1 lehrt eine Kopplungsvorrichtung mit einem an einem Bremseingabeelement anordenbaren Eingangskolben und einem an einem Hauptbremszylinder anordenbaren Ausgangskolben, auf welchen eine auf das Bremseingabeelement ausgeübte Fahrerbremskraft über den aus seiner Ausgangsstellung um einen Einbremsweg verstellten Eingangskolben übertragbar ist.

Die Druckschrift DE 10 2007 016 862 A1 lehrt ein Bremssystem mit einer Aktuatoreinheit, die ein Bremspedal, einen Pedalsimulator und einen elektromechanischen Bremskraftverstärker umfasst. Das Bremssystem umfasst weiter einen Hauptbremszylinder, über den mindestens eine Radbremse mit einem vorgebbaren Bremsdruck ansteuerbar ist, wobei das Bremspedal oder der elektromechanische Bremskraftverstärker zum Aufbau oder Abbau eines Bremsdrucks auf den Hauptbremszylinder wirken.

### Kurzer Abriss

Es sind eine elektrohydraulische Kraftfahrzeug-Bremsanlage sowie ein Verfahren für das Betreiben einer solchen Bremsanlage anzugeben, die eine insbesondere aus Sicherheitsaspekten vorteilhafte Funktionalität aufweisen.

Gemäß einem Aspekt wird eine elektrohydraulische Kraftfahrzeug-Bremsanlage angegeben, die einen Hauptzylinder, einen elektromechanischen Aktuator zur Betätigung eines im Hauptzylinder aufgenommenen ersten Kolbens in einem "Brake-By-Wire", BBW-, Modus der Bremsanlage und einen mittels eines Bremspedals betätigbaren mechanischen Aktuator zur Betätigung des ersten Kolbens in einem "Push-Through", PT-, Modus der Bremsanlage umfasst. Im BBW-Modus ist ein Spalt mit einer Spaltlänge in einem Kraftübertragungsweg zwischen dem Bremspedal und dem ersten Kolben vorhanden, um das Bremspedal vom ersten Kolben zu entkoppeln. Die Bremsanlage ist derart konfiguriert, dass im BBW-Modus die Spaltlänge eine Abhängigkeit von einem Pedalweg des Bremspedals aufweist.

Der im Hauptzylinder aufgenommene Kolben kann durch den elektromechanischen Aktuator unmittelbar oder mittelbar betätigt werden. Beispielsweise kann der elektromechanische Aktuator zur direkten Einwirkung auf den Kolben des Hauptzylinders angeordnet sein. Er kann hierfür mit dem Kolben mechanisch gekoppelt oder koppelbar sein. Der Kolben kann dann unmittelbar durch den Aktuator betätigt werden. Alternativ hierzu kann der elektromechanische Aktuator mit einer vom Hauptzylinder verschiedenen Zylinder-Kolben-Einrichtung der Bremsanlage zusammenwirken. Ferner kann die Zylinder-Kolben-Einrichtung auslassseitig mit dem Kolben des Hauptzylinders fluidisch gekoppelt sein. In diesem Fall kann der Kolben des Hauptzylinders über einen durch die Zylinder-Kolben-Einrichtung (und mit Hilfe des elektromechanischen Aktuators) bereitgestellten Hydraulikdruck hydraulisch betätigt werden.

Die Abhängigkeit der Spaltlänge vom Pedalweg kann je nach den gegebenen Erfordernissen verschieden ausgebildet sein. Gemäß einer Implementierung nimmt die Spaltlänge mit einem Niedertreten des Bremspedals zu. Diese Zunahme kann kontinuierlich oder diskontinuierlich (z. B. in Stufen) erfolgen. Ferner kann die Zunahme proportional (beispielsweise linear) oder nicht-proportional zum Pedalweg erfolgen. Zusätzlich oder alternativ hierzu kann die Spaltlänge mit einem Zurückführen des Bremspedals abnehmen. Die Abhängigkeit der Spaltlänge vom Pedalweg kann beim Niedertreten und Zurückführen des Bremspedals gleich oder unterschiedlich sein. Bei unterschiedlichen Abhängigkeiten lässt sich beispielsweise eine Hysterese konfigurieren.

Allgemein kann die Abhängigkeit der Spaltlänge vom Pedalweg durch ein Übersetzungsverhältnis definiert sein. Das Übersetzungsverhältnis kann beispielsweise zwischen einem zurückgelegten Weg einer pedalseitigen Begrenzung des Spalts und einem zurückgelegten Weg einer kolbenseitigen Begrenzung des Spalts festgelegt werden. Zweckmäßigerweise kann das Übersetzungsverhältnis im Bereich zwischen ungefähr 1:1,25 und 1:5 liegen (beispielsweise zwischen ungefähr 1:1,5 und 1:4).

Die Länge des Spalts in einer unbetätigten Stellung des Bremspedals kann zwischen ungefähr 0,5 mm und 2 mm (beispielsweise ungefähr 1 mm) betragen. Allgemein kann der Spalt zwischen einer ersten Stirnfläche des ersten Kolbens oder eines mit dem ersten Kolben bewegbaren ersten Betätigungselements auf der einen Seite und einer zweiten Stirnfläche eines mit dem Bremspedal gekoppelten zweiten Betätigungselements auf der anderen Seite begrenzt sein. Im PT-Modus können die erste Stirnfläche und die zweite Stirnfläche unter Überwindung des Spalts in Anlage bringbar sein. Auf diese Weise kann mittels des Bremspedals mechanisch der erste Kolben betätigt werden.

Die Abhängigkeit der Spaltlänge vom Pedalweg kann durch eine pedalwegabhängige und/oder eine pedalkraftabhängige Ansteuerbarkeit des elektromechanischen Aktuators realisiert sein. Zu diesem Zweck kann ein Pedalwegsensor und/oder ein Pedalkraftsensor verbaut sein. Die entsprechenden Ausgangssignale können von einem den elektromechanischen Aktuator ansteuernden Steuergerät ausgewertet werden.

Gemäß einer Variante ist der elektromechanische Aktuator derart ansteuerbar, dass der erste Kolben bei einem Niedertreten des Bremspedals schneller mittels des elektromechanischen Aktuators verfahren wird, als eine pedalseitige Begrenzung des Spalts dem ersten Kolben nacheilt. Auf diese Weise lässt sich eine mit dem Niedertreten des Bremspedals zunehmende Spaltlänge realisieren.

Der elektromechanische Aktuator kann ansteuerbar sein, um bei zumindest teilweise durchgetretenem Bremspedal einen Rückhub des ersten Zylinders in Richtung auf das Bremspedal zu bewirken. Ein derartiger Rückhub kann zu unterschiedlichen Zwecken geschehen, beispielsweise zum Ansaugen von Hydraulikfluid aus einem Reservoir in den Hauptzylinder. Gemäß einer Implementierung wird ein solcher Rückhub in einem Fahrdynamik-Regelbetrieb durchgeführt, wenn erkannt wird, dass das im Hauptzylinder noch verfügbare Volumen an Hydraulikfluid nicht mehr ausreicht. Der Rückhub des ersten Zylinders kann mit einer hydraulischen Abkopplung von Radbremsen vom Hauptzylinder einhergehen. Ferner kann hierzu ein Ventil zwischen dem Hauptzylinder und dem Reservoir geöffnet werden.

In einer Ausführung der Bremsanlage ist zusätzlich zum Hauptzylinder ein weiterer Hydraulikzylinder mit einem darin aufgenommenen zweiten Kolben vorgesehen. Das Bremspedal kann mit dem zweiten Kolben gekoppelt sein, um bei einem Niedertreten des Bremspedals Hydraulikfluid aus dem Hydraulikzylinder zu verdrängen. Der zweite Kolben kann dabei starr mit einem eine pedalseitige Begrenzung des Spalts bildenden Betätigungselement gekoppelt sein. Dieses Betätigungselement kann eine allgemein stangenförmige Gestalt besitzen.

Die Bremsanlage kann des weiteren eine hydraulische Simulations-Einrichtung für ein Pedalrückwirkverhalten umfassen. Diese Simulations-Einrichtung kann zur Aufnahme von aus dem Hydraulikzylinder durch Betätigen des zweiten Kolbens verdrängtem Hydraulikfluid ausgebildet sein.

Zwischen dem Hauptzylinder und der Simulations-Einrichtung kann ein Absperrventil vorgesehen sein. Zur Pedalwegbegrenzung kann der Hydraulikzylinder mittels des Absperrventils von der Simulations-Einrichtung abtrennbar ausgebildet sein. Eine Pedalwegbegrenzung kann zu unterschiedlichen Zwecken vorgesehen sein. So kann die Pedalwegbegrenzung beispielsweise in einem Fahrdynamik-Regelbetrieb aktiviert werden. Auf diese Weise lässt sich durch eine Verkürzung des Pedalwegs (im Vergleich zu einer regulären Bremsung) eine haptische Rückmeldung an dem Fahrer ausgeben. Die haptische Rückmeldung kann dabei auf das Einsetzen bzw. Ablaufen der Fahrdynamik-Regelung hinweisen. Gemäß einer Variante wird der Pedalweg im Fahrdynamik-Regelbetrieb in Abhängigkeit von einem Haftreibwert einer Fahrbahnoberfläche begrenzt. Dabei kann der Pedalweg umso kürzer ausfallen (also die Pedalwegbegrenzung umso schneller einsetzen), je geringer der Haftreibwert ist.

Gemäß einem weiteren Aspekt wird ein Verfahren für das Betreiben einer elektrohydraulischen Kraftfahrzeug-Bremsanlage angegeben, die einen Hauptzylinder, einen elektromechanischen Aktuator zur Betätigung eines im Hauptzylinder aufgenommenen ersten Kolbens in einem BBW-Modus der Bremsanlage und einen mittels eines Bremspedals betätigbaren mechanischen Aktuator zur Betätigung des ersten Kolbens in einem PT-Modus der Bremsanlage umfasst, wobei im BBW-Modus ein Spalt mit einer Spaltlänge in einem Kraftübertragungsweg zwischen dem Bremspedal und dem ersten Kolben vorhanden ist, um das Bremspedal vom ersten Kolben zu entkoppeln. Das Verfahren umfasst den Schritt des Einstellens, im BBW-Modus, der Spaltlänge in Abhängigkeit von einem Pedalweg des Bremspedals.

Ebenfalls angegeben wird ein Computerprogrammprodukt mit Programmcodemitteln zum Durchführen des hier vorgestellten Verfahrens, wenn das Computerprogrammprodukt auf wenigstens einem Prozessor abläuft. Das Computerprogrammprodukt kann von einem Kraftfahrzeug-Steuergerät oder Kraftfahrzeug-Steuergerätesystem umfasst sein.

Je nach Ausgestaltung der Fahrzeug-Bremsanlage kann das Entkoppeln des Bremspedals vom Hauptzylinder-Kolben mittels des Spalts zu unterschiedlichen Zwecken geschehen. Bei einer allgemein gemäß dem BBW-Prinzip ausgelegten Bremsanlage kann abgesehen von einem Notbremsbetrieb, in dem der PT-Modus aktiviert ist, eine ständige Entkopplung vorgesehen sein. Bei einer regenerativen Bremsanlage kann eine derartige Entkoppelung zumindest im Rahmen eines regenerativen Bremsbetriebs (Generatorbetrieb) an wenigstens einer Fahrzeugachse erfolgen.

Zur Ansteuerung des elektromechanischen Aktuators sowie optionaler weiterer Komponenten der Fahrzeug-Bremsanlage kann die Bremsanlage geeignete Ansteuereinrichtungen aufweisen. Diese Ansteuereinrichtungen können elektrische, elektronische oder programmgesteuerte Baugruppen sowie Kombinationen hiervon umfassen. Beispielsweise können die Ansteuereinrichtungen in einem gemeinsamen Steuergerät oder in einem System aus getrennten Steuergeräten (Electronic Control Units, ECUs) bereitgestellt werden.

### Kurze Beschreibung der Zeichnungen

Weitere Vorteile, Aspekte und Einzelheiten der hier vorgestellten hydraulischen Fahrzeug-Bremsanlage ergeben sich aus der nachfolgenden Beschreibung exemplarischer Ausführungsbeispiele sowie aus den Figuren. Es zeigen:
- Fig. 1: ein erstes Ausführungsbeispiel einer elektrohydraulischen FahrzeugBremsanlage;
- Fig. 2: ein zweites Ausführungsbeispiel einer elektrohydraulischen FahrzeugBremsanlage;
- Fig. 3: ein drittes Ausführungsbeispiel einer elektrohydraulischen FahrzeugBremsanlage;
- Fig. 4: ein viertes Ausführungsbeispiel einer elektrohydraulischen FahrzeugBremsanlage;
- Fig. 5A: eine schematische Ansicht der unbetätigten Grundstellung der Bremsanlage nach einer der Fign. 1 bis 4;
- Fig. 5B: eine schematische Ansicht der Betätigungsstellung der Bremsanlage nach einer der Fign. 1 bis 4; und
- 6A und 6B: schematische Diagramme, welche beispielhaft die Abhängigkeit einer Spaltlänge von einem Bremspedalweg veranschaulichen.

### Detaillierte Beschreibung

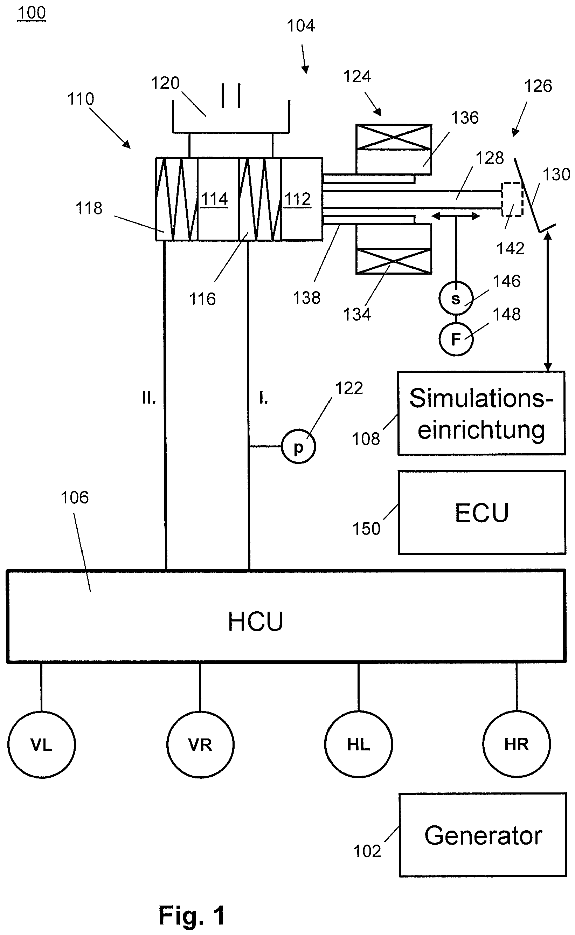

Fig. 1 zeigt ein erstes Ausführungsbeispiel einer hydraulischen Fahrzeug-Bremsanlage 100, die auf dem Brake-By-Wire (BBW)-Prinzip basiert. Die Bremsanlage 100 kann optional (z. B. bei Hybrid-Fahrzeugen) in einem regenerativen Modus betrieben werden. Zu diesen Zweck ist eine elektrische Maschine 102 vorgesehen, die eine Generatorfunktionalität bietet und selektiv mit Rädern und einem Energiespeicher, z.B. einer Batterie (nicht dargestellt), verbunden werden kann.

Wie in Fig. 1 veranschaulicht, umfasst die Bremsanlage 100 eine Hauptzylinder-Baugruppe 104, die an einer Fahrzeug-Spritzwand montiert werden kann. Eine hydraulische Steuereinheit (Hydraulic Control Unit, HCU) 106 der Bremsanlage 100 ist funktional zwischen der Hauptzylinder-Baugruppe 104 und vier Radbremsen VL, VR, HL und HR des Fahrzeugs angeordnet. Die HCU 106 ist als integrierte Baugruppe ausgebildet und umfasst eine Vielzahl von hydraulischen Einzelkomponenten sowie mehrere Fluideinlässe und Fluidauslässe. Ferner ist eine nur schematisch dargestellte Simulationseinrichtung 108 zum Bereitstellen eines Pedalrückwirkungsverhaltens im Betriebsbremsbetrieb vorgesehen. Die Simulationseinrichtung 108 kann auf einem mechanischen oder hydraulischen Prinzip basieren. Im zuletzt genannten Fall kann die Simulationseinrichtung 108 an die HCU 106 angeschlossen sein.

Die Hauptzylinder-Baugruppe 104 weist einen Hauptzylinder 110 mit einem darin verschieblich aufgenommenen Kolben auf. Der Kolben ist im Ausführungsbeispiel als Tandemkolben mit einem Primärkolben 112 und einem Sekundärkolben 114 ausgebildet und definiert im Hauptzylinder 110 zwei voneinander getrennte Hydraulikkammern 116, 118. Die beiden Hydraulikkammern 116, 118 des Hauptzylinders 110 sind zur Versorgung mit Hydraulikfluid über jeweils einen Anschluss mit einem drucklosen Hydraulikfluid-Reservoir 120 verbunden. Jede der beiden Hydraulikkammern 116, 118 ist ferner mit der HCU 106 gekoppelt und definiert jeweils einen Bremskreis I. und II. Im Ausführungsbeispiel ist für den Bremskreis I. ein Hydraulikdrucksensor 122 vorgesehen, der auch in die HCU 106 integriert werden könnte.

Die Hauptzylinder-Baugruppe 104 umfasst ferner einen elektromechanischen Aktuator (d.h. ein elektromechanisches Stellglied) 124 sowie einen mechanischen Aktuator (d.h. ein mechanisches Stellglied) 126. Sowohl der elektromechanische Aktuator 124 als auch der mechanische Aktuator 126 ermöglichen eine Betätigung des Hauptzylinder-Kolbens und wirken dazu auf eine eingangsseitige Stirnfläche dieses Kolbens, genauer gesagt des Primärkolbens 112, ein. Die Aktuatoren 124, 126 sind derart ausgebildet, dass sie unabhängig voneinander (und getrennt oder gemeinsam) den Hauptzylinder-Kolben zu betätigen vermögen.

Der mechanische Aktuator 126 besitzt ein Kraftübertragungselement 128, das stangenförmig ausgebildet ist und unmittelbar auf die eingangsseitige Stirnfläche des Primär-Kolbens 112 einzuwirken vermag. Wie in Fig. 1 gezeigt, ist das Kraftübertragungselement 128 mit einem Bremspedal 130 gekoppelt. Es versteht sich, dass der mechanische Aktuator 126 weitere Komponenten umfassen kann, die funktional zwischen dem Bremspedal 130 und dem Hauptzylinder 110 angeordnet sind. Derartige weitere Komponenten können sowohl mechanischer als auch hydraulischer Natur sein. Im zuletzt genannten Fall ist der Aktuator 126 als hydraulisch-mechanischer Aktuator 126 ausgebildet.

Der elektromechanische Aktuator 124 weist einen Elektromotor 134 sowie ein dem Elektromotor 134 abtriebsseitig nachfolgendes Getriebe 136, 138 auf. Im Ausführungsbeispiel ist das Getriebe eine Anordnung aus einer drehbar gelagerten Mutter 136 und einer mit der Mutter 136 (z.B. über Wälzkörper wie Kugeln) in Eingriff stehenden und in axialer Richtung beweglichen Spindel 138. In anderen Ausführungsbeispielen können Zahnstangengetriebe oder andere Getriebetypen zum Einsatz gelangen.

Der Elektromotor 134 besitzt im vorliegenden Ausführungsbeispiel eine zylindrische Bauform und erstreckt sich konzentrisch zum Kraftübertragungselement 128 des mechanischen Aktuators 126. Genauer gesagt ist der Elektromotor 134 radial außen bezüglich des Kraftübertragungselements 128 angeordnet. Ein Rotor (nicht dargestellt) des Elektromotors 134 ist drehfest mit der Getriebemutter 136 gekoppelt, um diese in Drehung zu versetzen. Eine Drehbewegung der Mutter 136 überträgt sich derart auf die Spindel 138, dass eine axiale Verschiebung der Spindel 138 resultiert. Die in Fig. 1 linke Stirnseite der Spindel 138 kann dabei (ggf. über ein Zwischenglied) in Anlage an die in Fig. 1 rechte Stirnseite des Primärkolbens 112 gelangen und in Folge dessen den Primärkolben 112 (zusammen mit dem Sekundärkolben 114) in Fig. 1 nach links verschieben. Ferner lässt sich die Kolbenanordnung 112, 114 auch von dem sich durch die (als Hohlkörper ausgebildete) Spindel 138 erstreckenden Kraftübertragungselement 128 des mechanischen Aktuators 126 in Fig. 1 nach links verschieben. Ein Verschieben der Kolbenanordnung 112, 114 in Fig. 1 nach rechts wird mittels des in den Hydraulikkammern 116, 118 herrschenden Hydraulikdrucks (bei Loslassen des Bremspedals 130 und ggf. bei motorischem Verschieben der Spindel 138 nach rechts) bewerkstelligt.

In der in Fig. 1 gezeigten Variante der Hauptzylinder-Baugruppe 104 ist der elektromechanische Aktuator 124 derart angeordnet, dass er unmittelbar auf den Kolben (genauer gesagt auf den Primärkolben 112) des Hauptzylinders 110 zum Aufbau eines Hydraulikdrucks an den Radbremsen einwirken kann. Mit anderen Worten wird der Kolben 112 des Hauptzylinders 110 unmittelbar durch den elektromechanischen Aktuator 124 mechanisch betätigt. In einer alternativen Ausgestaltung der Hauptzylinder-Baugruppe 104 kann der Kolben des Hauptzylinders 110 mit Hilfe des elektromechanischen Aktuators 124 hydraulisch betätigt werden (in Fig. 1 nicht dargestellt). In diesem Fall kann der Hauptzylinder 110 mit einer weiteren, mit dem elektromechanischen Aktuator 124 zusammenwirkenden Zylinder-Kolben-Einrichtung fluidisch gekoppelt sein. Konkret kann die mit dem elektromechanischen Aktuator 124 gekoppelte Zylinder-Kolben-Einrichtung auslassseitig mit dem Primärkolben 112 des Hauptzylinders 110 beispielsweise derart fluidisch gekoppelt sein, dass ein in der Zylinder-Kolben-Einrichtung erzeugter Hydraulikdruck unmittelbar auf den Primärkolben 112 wirkt und somit zu einer Betätigung des Primärkolbens 112 im Hauptzylinder 110 führt. Der Primärkolben 112 wird dann in einer Realisierung aufgrund des einwirkenden Hydraulikdruckes im Hauptzylinder 110 so weit verschoben (Verschiebung nach links in Fig. 1), bis der in den Hauptzylinder-Kammern 116, 118 erzeugte Hydraulikdruck dem in der zusätzlichen Zylinder-Kolben-Einrichtung erzeugten Hydraulikdruck entspricht.

Wie in Fig. 1 gezeigt, ist eine Entkoppeleinrichtung 142 funktional zwischen dem Bremspedal 130 und dem Kraftübertragungselement 128 vorgesehen. Die Entkoppeleinrichtung 142 ermöglicht ein selektives Entkoppeln des Bremspedals 130 von der Kolbenanordnung 112, 114 im Hauptzylinder 110. Nachfolgend werden die Funktionsweisen der Entkoppeleinrichtung 142 und der Simulationseinrichtung 108 näher erläutert. In diesem Zusammenhang ist darauf hinzuweisen, dass die in Fig. 1 dargestellt Bremsanlage 100 auf dem Prinzip des Brake-By-Wire (BBW) basiert. Dies bedeutet, dass im Rahmen einer normalen Betriebsbremsung sowohl die Entkoppeleinrichtung 142 als auch die Simulationseinrichtung 108 aktiviert sind. Demgemäß ist das Bremspedal 130 vom Kraftübertragungselement 128 (und damit von der Kolbenanordnung 112, 114 im Hauptzylinder 110) über einen in Fig. 1 nicht dargestellten Spalt entkoppelt, und eine Betätigung der Kolbenanordnung 112, 114 kann ausschließlich über den elektromechanischen Aktuator 124 erfolgen. Das gewohnte Pedalrückwirkverhalten wird in diesem Fall von der mit dem Bremspedal 130 gekoppelten Simulationseinrichtung 108 bereitgestellt.

Im Rahmen der Betriebsbremsung übernimmt damit der elektromechanische Aktuator 124 die Bremskrafterzeugungsfunktion. Eine durch Niedertreten des Bremspedals 130 angeforderte Bremskraft wird dabei dadurch erzeugt, dass mittels des Elektromotors 134 die Spindel 138 in Fig. 1 nach links verschoben und dadurch auch der Primärkolben 112 und der Sekundär-Kolben 114 des Hauptzylinders 110 nach links bewegt werden. Auf diese Weise wird Hydraulikfluid aus den Hydraulikkammern 116, 118 über die HCU 106 zu den Radbremsen VL, VR, HL und HR gefördert.

Die Höhe der daraus resultierenden Bremskraft der Radbremsen VL, VR, HL und HR wird in Abhängigkeit einer sensorisch erfassten Bremspedalbetätigung eingestellt. Zu diesem Zweck sind ein Wegsensor 146 und ein Kraftsensor 148 vorgesehen, deren Ausgangssignale von einem den Elektromotor 134 ansteuernden Steuergerät (Electronic Control Unit, ECU) 150 ausgewertet werden. Der Wegsensor 146 erfasst einen mit einer Betätigung des Bremspedals 130 in Zusammenhang stehenden Betätigungsweg, während der Kraftsensor 148 eine damit in Zusammenhang stehende Betätigungskraft erfasst. In Abhängigkeit von den Ausgangssignalen der Sensoren 146, 148 (sowie ggf. des Drucksensors 122) wird vom Steuergerät 150 ein Ansteuersignal für den Elektromotor 134 erzeugt.

Im vorliegenden Ausführungsbeispiel erfolgt die Ansteuerung des Elektromotors 134 (und damit des elektromechanischen Aktuators 124) derart, dass die Länge des eingangs genannten Spalts zur Entkopplung des Bremspedals 130 von der Hauptzylinder-Kolbenanordnung 112, 114 eine Abhängigkeit vom Pedalweg des Bremspedals 130 aufweist. Die Abhängigkeit ist derart gewählt, dass die Spaltlänge mit einem Niedertreten des Bremspedals 130 (also mit zunehmendem Pedalweg) zunimmt. Zu diesem Zweck wertet das Steuergerät 150 das Ausgangssignal des Wegsensors 146 (und zusätzlich oder alternativ des Kraftsensors 148) aus und steuert den elektromechanischen Aktuator 124 derart an, dass die Kolbenanordnung 112, 114 bei einem Niedertreten des Bremspedals 130 schneller in Fig. 1 nach links verfahren wird, als eine bremspedalseitige Begrenzung des Spalts der Kolbenanordnung 112, 114 nacheilt.

Nachdem die Vorgänge bei einer Betriebsbremsung (BBW-Modus) näher erläutert wurden, wird jetzt kurz der PT-Modus bei einem Notbremsbetrieb geschildert. Der Notbremsbetrieb ist beispielsweise die Folge des Ausfalls der Fahrzeugbatterie oder einer Komponente des elektromechanischen Aktuators 124. Eine Deaktivierung der Entkoppeleinrichtung 142 (und der Simulationseinrichtung 108) im Notbremsbetrieb ermöglicht eine direkte Koppelung des Bremspedals 130 mit dem Hauptzylinder 110, nämlich über das Kraftübertragungselement 128.

Die Notbremsung wird eingeleitet durch Niedertreten des Bremspedals 130. Die Bremspedalbetätigung überträgt sich dann unter Überwindung des eingangs genannten Spalts über das Kraftübertragungselement 128 auf den Hauptzylinder 110. In Folge dessen verschiebt sich die Kolbenanordnung 112, 114 in Fig. 1 nach links. Dadurch wird zur Bremskrafterzeugung Hydraulikfluid aus den Hydraulikkammern 116, 118 des Hauptzylinders 110 über die HCU 106 zu den Radbremsen VL, VR, HL und HR gefördert.

Gemäß einer ersten Ausführungsform besitzt die HCU 106 in Bezug auf den Fahrdynamikregelbetrieb (Bremsregelfunktionen wie ABS, ASR, ESP, etc.) einen im Prinzip herkömmlichen Aufbau mit insgesamt 12 Ventilen (zusätzlich zu Ventilen, die beispielsweise im Zusammenhang mit der Aktivierung bzw. Deaktivierung der Entkoppeleinrichtung 142 und der Simulationseinrichtung 108 verwendet werden). Da der elektromechanische Aktuator 124 dann (ggf. ausschließlich) im Rahmen einer Bremskrafterzeugung angesteuert wird, werden die zusätzlichen Regelfunktionen in bekannter Weise mittels der HCU 106 (und ggf. einem separaten Hydraulikdruckerzeuger wie einer Hydraulikpumpe) bewerkstelligt. Es kann aber auch auf einen Hydraulikdruckerzeuger in der HCU 106 verzichtet werden. Der elektromechanische Aktuator 124 übernimmt dann zusätzlich noch die Druckmodulation im Rahmen des Regelbetriebs. Ein entsprechender Regelmechanismus wird hierzu in dem für den elektromechanischen Aktuator 124 vorgesehene Steuergerät 150 implementiert.

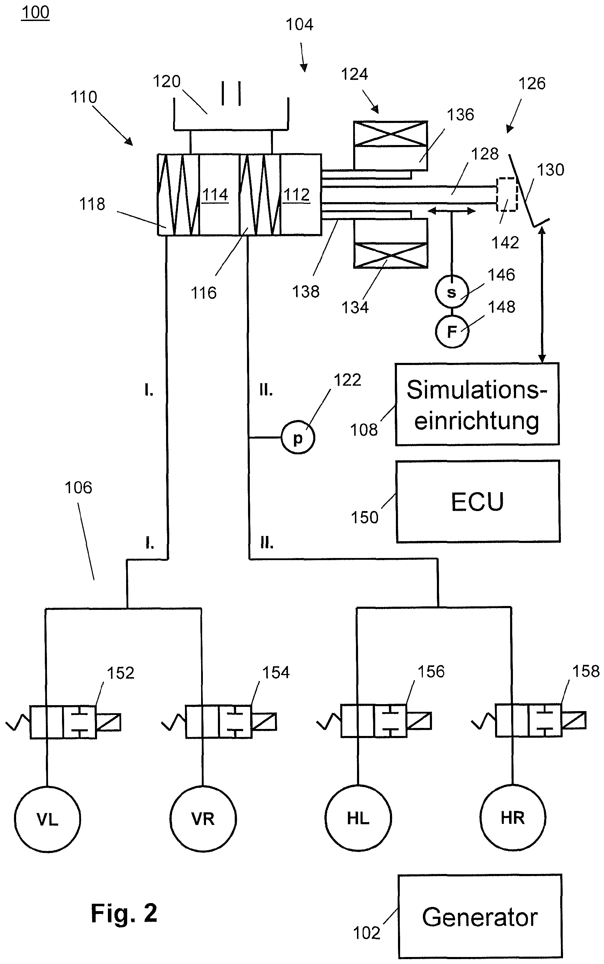

Bei einer weiteren Ausführungsform gemäß Fig. 2 können in der HCU 106 die speziellen Ventile für den Fahrdynamikregelbetrieb (z.B. den ASR- und ESP-Betrieb) bis auf vier Ventile 152, 154, 156, 158 entfallen. Bei dieser anderen Ausführungsform der HCU 106 kann also auf die aus der WO 2010/091883 A oder WO 2011/141158 A (vgl. Fig. 15) bekannte Ventilanordnung mit lediglich vier Ventilen 152, 154, 156, 158 (und der entsprechenden Ansteuerung) zurückgegriffen werden. Auch die Hydraulikdruckmodulation im Regelbetrieb erfolgt dann mittels des elektromechanischen Aktuators 124. Mit anderen Worten wird der elektromechanische Aktuator 124 in diesem Fall nicht nur zur Bremskrafterzeugung im Rahmen einer Betriebsbremsung, sondern auch beispielsweise zum Zweck der Fahrdynamikregelung (also z.B. im ABS- und/oder ASR- und/oder ESP-Regelbetrieb) angesteuert. Zusammen mit der Ansteuerung des elektromechanischen Aktuators 124 erfolgt eine radindividuelle oder radgruppenindividuelle Ansteuerung der Ventile 152, 154, 156, 158 im Multiplexbetrieb. In der in Fig. 2 gezeigten Implementierung sind zwischen den Ventilen 152, 154, 156, 158 und dem Hauptzylinder keine weiteren Ventile für Fahrdynamikregelzwecke vorhanden.

Der Multiplex-Betrieb kann ein Zeitmultiplex-Betrieb sein. Dabei können allgemein einzelne Zeitschlitze vorgegeben werden. Einem einzelnen Zeitschlitz wiederum können eine oder mehrere der Ventile 152, 154, 156, 158 zugeordnet sein, die während des entsprechenden Zeitschlitzes betätigt werden (beispielsweise durch ein- oder mehrfache Änderung des Schaltzustands von geöffnet nach geschlossen und/oder umgekehrt). Gemäß einer Realisierung ist jedem der Ventile 152, 154, 156, 158 genau ein Zeitschlitz zugeordnet. Einer oder mehreren weiteren Ventilanordnungen (in Fig. 2 nicht dargestellt) können ein oder mehrere weitere Zeitschlitze zugeordnet werden.

Im Multiplexbetrieb können beispielsweise zunächst mehrere oder alle der Ventile 152, 154, 156, 158 geöffnet sein und gleichzeitig mittels des elektromechanischen Aktuators 124 ein Hydraulikdruck an mehreren oder allen zugeordneten Radbremsen VL, VR, HL und HR aufgebaut werden. Bei Erreichen eines radindividuellen Zieldrucks schließt dann das entsprechende Ventil 152, 154, 156, 158 zeitschlitz-synchron, während eines oder mehrere weitere Ventile 152, 154, 156, 158 so lange weiterhin geöffnet bleiben, bis auch dort der jeweilige Zieldruck erreicht ist. Die vier Ventile 152, 154, 156, 158 werden daher im Multiplexbetrieb individuell pro Rad oder Radgruppe in Abhängigkeit des jeweiligen Zieldrucks geöffnet und geschlossen.

Gemäß einer Ausführung sind die Ventile 152, 154, 156, 158 als 2/2-Wege-Ventile realisiert und beispielsweise als nichtregelbare Absperrventile ausgebildet. In diesem Fall kann daher kein Öffnungsquerschnitt eingestellt werden, wie es beispielsweise bei Proportionalventilen der Fall wäre. In einer anderen Ausführung sind die Ventile 152, 154, 156, 158 als Proportionalventile mit einstellbarem Öffnungsquerschnitt realisiert.

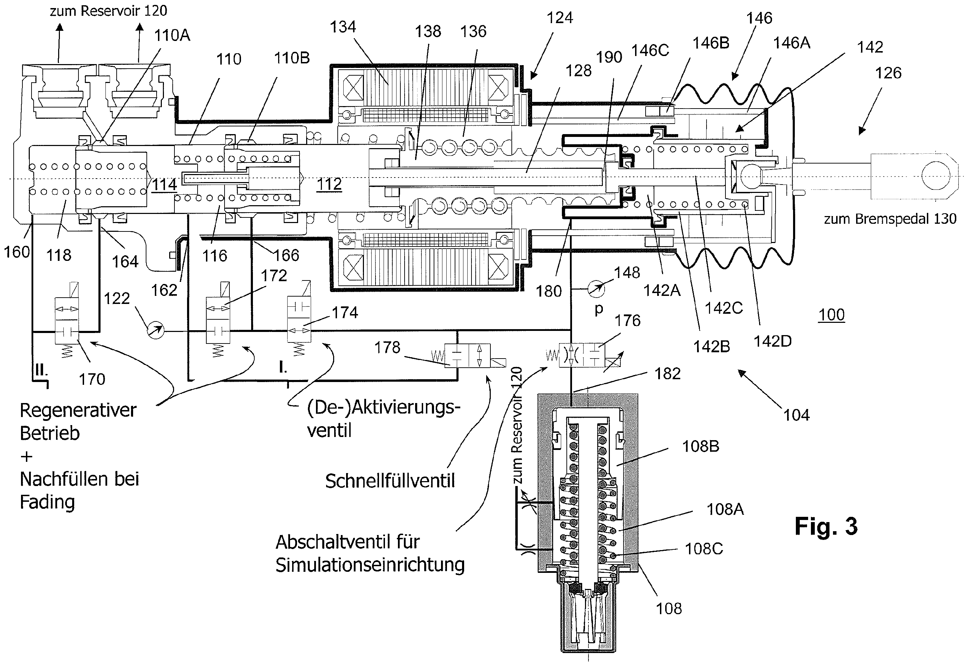

Fig. 3 zeigt ein detaillierteres Ausführungsbeispiel einer Fahrzeug-Bremsanlage 100, welche auf dem im Zusammenhang mit den schematischen Ausführungsbeispielen der Fign. 1 und 2 erläuterten Funktionsprinzip basiert. Gleiche oder ähnliche Elemente wurden dabei mit den gleichen Bezugszeichen wie in den Fign. 1 und 2 versehen, und auf deren Erläuterung wird nachfolgend verzichtet. Der Klarheit halber wurden die ECU, die Radbremsen, die den Radbremsen zugeordneten Ventileinheiten der HCU und der Generator für den regenerativen Bremsbetrieb nicht dargestellt.

Auch die in Fig. 3 veranschaulichte Fahrzeug-Bremsanlage 100 umfasst zwei Bremskreise I. und II., wobei zwei Hydraulikkammern 116, 118 eines Hauptzylinders 110 jeweils wiederum genau einem Bremskreis I., II. zugeordnet sind. Der Hauptzylinder 110 besitzt pro Bremskreis I., II. zwei Anschlüsse. Die beiden Hydraulikkammern 116, 118 münden dabei jeweils in einen ersten Anschluss 160, 162, über den Hydraulikfluid aus der jeweiligen Kammer 116, 118 in den zugeordneten Bremskreis I., II. gefördert werden kann. Ferner kann jeder der Bremskreise I. und II. über jeweils einen zweiten Anschluss 164, 166, der in eine entsprechende Ringkammer 110A, 110B im Hauptzylinder 110 mündet, mit dem in Fig. 3 nicht dargestellten drucklosen Hydraulikfluid-Reservoir (Bezugszeichen 120 in Fig. 1) verbunden werden.

Zwischen dem jeweils ersten Anschluss 160, 162 und dem jeweils zweiten Anschluss 164, 166 des Hauptzylinders 110 ist jeweils ein Ventil 170, 172 vorgesehen, das im Ausführungsbeispiel als ein 2/2-Wege-Ventil realisiert ist. Mittels der Ventile 170, 172 können die ersten und zweiten Anschlüsse 160, 162, 164, 166 selektiv miteinander verbunden werden. Dies entspricht einem "hydraulischer Kurzschluss" zwischen dem Hauptzylinder 110 einerseits und, auf der anderen Seite, dem drucklosen Hydraulikfluidreservoir (welches dann über die Ringkammern 110A, 110B mit den Hydraulikkammern 116, 118 verbunden wird). In diesem Zustand können die Kolben 112, 114 im Hauptzylinder 110 im Wesentlichen widerstandsfrei durch den elektromechanischen Aktuator 124 oder den mechanischen Aktuator 126 verschoben werden ("Leerwegfreischaltung"). Die beiden Ventile 170, 172 ermöglichen so beispielsweise einen regenerativen Bremsbetrieb (Generatorbetrieb). Hier wird das bei einer Förderbewegung im Hauptzylinder 110 aus den Hydraulikkammern 116, 118 verdrängte Hydraulikfluid dann nicht zu den Radbremsen geleitet, sondern zum drucklosen Hydraulikfluidreservoir, ohne dass es zu einem (im regenerativen Bremsbetrieb in der Regel unerwünschten) Hydraulikdruckaufbau an den Radbremsen käme. Eine Bremswirkung wird im regenerativen Bremsbetrieb dann durch den Generator (vgl. Bezugszeichen 102 in den Fign. 1 und 2) erzielt.

Es ist darauf hinzuweisen, dass der regenerative Bremsbetrieb achsweise implementiert sein kann. Daher kann im Fall einer achsbezogenen Bremskreisaufteilung im regenerativen Bremsbetrieb eines der beiden Ventile 170, 172 geschlossen und das andere geöffnet sein.

Die beiden Ventile 170, 172 ermöglichen ferner den Abbau von Hydraulikdruck an den Radbremsen. Ein solcher Druckabbau kann bei Ausfall (z.B. einer Blockierung) des elektromechanischen Aktuators 124 erwünscht sein oder im Fahrdynamikregelbetrieb, um einen Rückhub des elektromechanischen Aktuators 124 zu vermeiden (z.B. um eine Rückwirkung auf das Bremspedal zu vermeiden). Auch zum Druckabbau werden die beiden Ventile 170, 172 in ihre geöffnete Stellung übergeführt, wodurch Hydraulikfluid aus den Radbremsen über die Ringkammern 110A, 110B im Hauptzylinder 110 in das Hydraulikfluid-Reservoir zurückströmen kann.

Schließlich ermöglichen die Ventile 170, 172 auch noch ein Nachfüllen der Hydraulikkammern 116, 118. Ein solches Nachfüllen kann während eines laufenden Bremsvorgangs erforderlich werden (z.B. aufgrund von so genanntem Bremsen-"Fading"). Zum Nachfüllen werden die Radbremsen über zugeordnete Ventile der HCU (in Fig. 3 nicht dargestellt) fluidisch von den Hydraulikkammern 116, 118 getrennt. Der an den Radbremsen herrschende Hydraulikdruck wird also "eingesperrt". Daraufhin werden die Ventile 170, 172 geöffnet. Bei einem anschließenden Rückhub der im Hauptzylinder 110 vorgesehen Kolben 112, 114 (in Fig. 3 nach rechts) wird dann Hydraulikfluid aus dem drucklosen Reservoir in die Kammern 116, 118 gesaugt. Schließlich können die Ventile 170, 172 wieder geschlossen und die Hydraulikverbindungen zu den Radbremsen wieder geöffnet werden. Bei einem nachfolgenden Förderhub der Kolben 112, 114 (in Fig. 3 nach links) kann dann der vormals "eingesperrte" Hydraulikdruck weiter erhöht werden.

Wie in Fig. 3 gezeigt, basieren im vorliegenden Ausführungsbeispiel sowohl eine Simulationseinrichtung 108 als auch eine Entkoppeleinrichtung 142 auf einem hydraulischen Prinzip. Beide Einrichtungen 108, 142 umfassen jeweils einen Zylinder 108A, 142A zur Aufnahme von Hydraulikfluid sowie einen im jeweiligen Zylinder 108A, 142A aufgenommenen Kolben 108B, 142B. Der Kolben 142B der Entkoppeleinrichtung ist 142 ist mechanisch mit einem in Fig. 3 nicht dargestellten Bremspedal (vgl. Bezugszeichen 130 in den Fign. 1 und 2) gekoppelt. Ferner besitzt der Kolben 142B einen sich durch den Zylinder 142A in axialer Richtung hindurch erstreckenden Fortsatz 142C. Der Kolbenfortsatz 142C verläuft koaxial zu einem Kraftübertragungselement 128 für den Primärkolben 112 und ist diesem in Betätigungsrichtung des Bremspedals vorgelagert.

Jeder der beiden Kolben 108B, 142B wird von einem elastischen Element 108C, 142D (hier jeweils einer Schraubenfeder) in seine Ausgangsstellung vorgespannt. Die Kennlinie des elastischen Elements 108C der Simulationseinrichtung 108 definiert hierbei das gewünschte Pedalrückwirkverhalten.

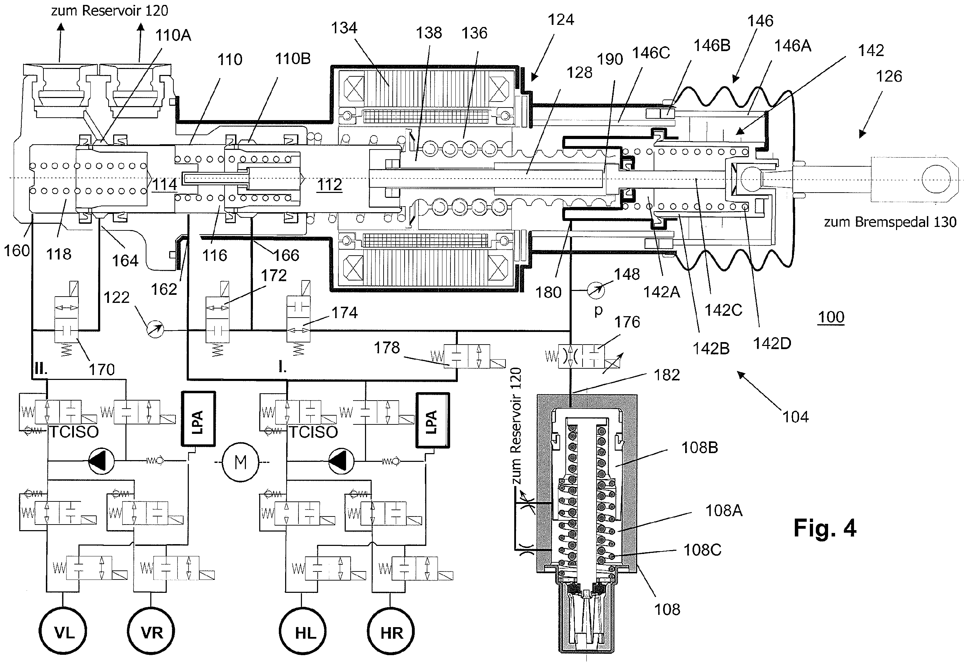

Wie ferner in Fig. 3 gezeigt, umfasst die Fahrzeug-Bremsanlage 100 im vorliegenden Ausführungsbeispiel drei weitere Ventile 174, 176, 178, die hier als 2/2-Wege-Ventile realisiert sind. Es versteht sich, dass einzelne oder alle dieser drei Ventile 174, 176, 178 bei anderen Ausführungsformen, bei denen die entsprechenden Funktionalitäten nicht erforderlich sind, entfallen können. Ferner versteht sich, dass alle diese Ventile Teil eines einzigen HCU-Blocks (vgl. Bezugszeichen 106 in den Fign. 1 und 2) sein können. Dieser HCU-Block kann weitere Ventile umfassen (vgl. Fig. 4 weiter unten).

Das erste Ventil 174 ist einerseits zwischen der Entkoppeleinrichtung 142 (über einen im Zylinder 142A vorgesehenen Anschluss 180) sowie der Simulationseinrichtung 108 (über einen im Zylinder 108A vorgesehenen Anschluss 182) und andererseits dem drucklosen Hydraulikfluidreservoir (über den Anschluss 166 des Hauptzylinders 110) vorgesehen. Dem Anschluss 182 des Zylinders 108A ist das zweite Ventil 176 vorgeschaltet, das in seiner Durchlass-Stellung eine Drosselcharakteristik aufweist. Das dritte Ventil 178 schließlich ist zwischen der Hydraulikkammer 116 (über den Anschluss 166) und dem Bremskreis I. einerseits und dem Zylinder 142A der Entkoppeleinrichtung 142 (über den Anschluss 180) andererseits vorgesehen.

Das erste Ventil 174 ermöglicht eine selektive Aktivierung und Deaktivierung der Entkoppeleinrichtung 142 (und indirekt auch der Simulationseinrichtung 108). Befindet sich das Ventil 174 in seiner geöffneten Stellung, ist der Zylinder 142A der Entkoppeleinrichtung 142 hydraulisch mit dem drucklosen Hydraulikreservoir verbunden. In dieser Stellung ist die Entkoppeleinrichtung 142 entsprechend dem Notbremsbetrieb deaktiviert. Ferner ist auch die Simulationseinrichtung 108 deaktiviert.

Das Öffnen des Ventils 174 bewirkt, dass bei Verschieben des Kolbens 142B (infolge einer Betätigung des Bremspedals) das im Zylinder 142A aufgenommene Hydraulikfluid weitgehend widerstandsfrei in das drucklose Hydraulikfluidreservoir gefördert werden kann. Dieser Vorgang ist im Wesentlichen unabhängig von der Stellung des Ventils 176, da dieses auch in seiner geöffneten Stellung eine signifikante Drosselwirkung besitzt. Somit ist bei geöffneter Stellung des Ventils 174 auf indirekte Weise auch die Simulationseinrichtung 108 deaktiviert.

Bei einer Bremspedalbetätigung im geöffneten Zustand des Ventils 174 überwindet der Kolbenfortsatz 142C einen Spalt 190 hin zum Kraftübertragungselement 128 und gelangt infolgedessen in Anlage an das Kraftübertragungselement 128. Das Kraftübertragungselement 128 wird nach Überwindung des Spalts 190 von der Verschiebung des Kolbenfortsatzes 142C erfasst und betätigt daraufhin den Primärkolben 112 (sowie - indirekt - den Sekundärkolben 114) im Hauptbremszylinder 110. Dies entspricht der bereits im Zusammenhang mit der Fig. 1 erläuterten direkten Kopplung von Bremspedal und Hauptzylinderkolben zum Hydraulikdruckaufbau in den Bremskreisen I., II. im Notbremsbetrieb.

Bei geschlossenem Ventil 174 (und geschlossenem Ventil 178) ist die Entkoppeleinrichtung 142 hingegen aktiviert. Dies entspricht dem Betriebsbremsbetrieb. Dabei wird bei einer Betätigung des Bremspedals Hydraulikfluid aus dem Zylinder 142A in den Zylinder 108A der Simulationseinrichtung 108 gefördert. Auf diese Weise wird der Simulator-Kolben 108B gegen die vom elastischen Element 108C bereit gestellte Gegenkraft verschoben, so dass sich das gewohnte Pedalrückwirkverhalten einstellt. Gleichzeitig wird der Spalt 190 zwischen dem Kolbenfortsatz 142C und dem Kraftübertragungselement 128 weiter aufrechterhalten. Dadurch ist das Bremspedal vom Hauptzylinder mechanisch entkoppelt.

Im vorliegenden Ausführungsbeispiel erfolgt die Aufrechterhaltung des Spalts 190 dadurch, dass mittels des elektromechanischen Aktuators 124 der Primärkolben 112 wenigstens so schnell in Fig. 3 nach links bewegt wird, wie sich der Kolben 142B aufgrund der Bremspedalbetätigung nach links bewegt. Da das Kraftübertragungselement 128 mechanisch oder anderweitig (z.B. magnetisch) mit dem Primärkolben 112 gekoppelt ist, bewegt sich das Kraftübertragungselement 128 zusammen mit dem Primärkolben 112 bei dessen Betätigung mittels der Getriebespindel 138. Diese Mitnahme des Kraftübertragungselements 128 gestattet die Aufrechterhaltung des Spalts 190.

Die Aufrechterhaltung des Spalts 190 im Betriebsbremsbetrieb erfordert eine präzise Erfassung des vom Kolben 142B zurückgelegten Wegs (und damit des Pedalwegs). Zu diesem Zweck ist ein auf einem magnetischen Prinzip basierender Wegsensor 146 vorgesehen. Der Wegsensor 146 umfasst einen starr mit dem Kolben 142B gekoppelten Stößel 146A, an dessen Ende ein Magnetelement 146B angebracht ist. Die Bewegung des Magnetelements 146B (d.h. der vom Stößel 146A bzw. Kolben 142B zurückgelegte Weg) wird mittels eines Hallsensors 146C erfasst. Ein Ausgangssignal des Hallsensors 146C wird von einer in Fig. 3 nicht gezeigten Steuereinheit (vgl. Bezugszeichen 150 in den Fign. 1 und 2) ausgewertet. Basierend auf dieser Auswertung kann dann der elektromechanische Aktuator 124 angesteuert werden.

Nun zum zweiten Ventil 176, welches der Simulationseinrichtung 108 vorgeschaltet ist und in manchen Ausführungsformen entfallen kann. Dieses Ventil 176 besitzt eine vorgegebene oder einstellbare Drosselfunktion. Mittels der einstellbaren Drosselfunktion lässt sich beispielsweise eine Hysterese oder anderweitige Kennlinie für das Pedalrückwirkverhalten erzielen. Ferner kann durch selektives Sperren des Ventils 176 die Bewegung des Kolbens 142B (bei geschlossenen Ventilen 174, 178) und damit der Bremspedalweg begrenzt werden.

Das dritte Ventil 178 ermöglicht in seiner geöffneten Stellung das Fördern von Hydraulikfluid aus dem Zylinder 142A in den Bremskreis I. bzw. die Hydraulikkammer 116 des Hauptzylinders 110 und umgekehrt. Eine Fluidförderung aus dem Zylinder 142A in den Bremskreis I. ermöglicht beispielsweise ein schnelles Anbremsen (z.B. vor dem Einsetzen der Förderwirkung des elektromechanischen Aktuators 124), wobei das Ventil 178 umgehend wieder geschlossen wird. Ferner lässt sich bei geöffnetem Ventil 178 eine hydraulische Rückwirkung (z.B. einer mittels des elektromechanischen Aktuators 124 erzeugten Druckmodulation im Fahrdynamikregelbetrieb) über den Kolben 142B auf das Bremspedal erzielen.

In einer in den Anschluss 180 des Zylinders 142A mündenden Hydraulikleitung ist ein Drucksensor 148 vorgesehen, dessen Ausgangssignal einen Rückschluss auf die Betätigungskraft am Bremspedal gestattet. Das Ausgangssignal dieses Drucksensors 148 wird von einer in Fig. 3 nicht gezeigte Steuereinheit ausgewertet. Basierend auf dieser Auswertung kann dann eine Ansteuerung eines oder mehrerer der Ventile 170, 172, 174, 176, 178 zur Realisierung der oben geschilderten Funktionalitäten erfolgen. Ferner kann basierend auf dieser Auswertung der elektromechanische Aktuator 124 angesteuert werden.

Bei der in Fig. 3 gezeigten Bremsanlage 100 kann die in Fig. 1 dargestellte HCU 106 verwendet werden. Eine beispielhafte Realisierung dieser HCU 106 für die Bremsanlage 100 gemäß Fig. 3 ist in Fig. 4 gezeigt. Hier sind insgesamt 12 (zusätzliche) Ventile zur Realisierung der Fahrdynamikregelfunktionen vorgesehen sowie eine zusätzliche Hydraulikpumpe. In einer alternativen Ausführungsform kann für die in Fig. 3 gezeigten Bremsanlage 100 auch die Multiplex-Anordnung gemäß Fig. 2 (mit insgesamt vier Ventilen zusätzlich zu den in Fig. 3 veranschaulichten Ventilen) zum Einsatz gelangen.

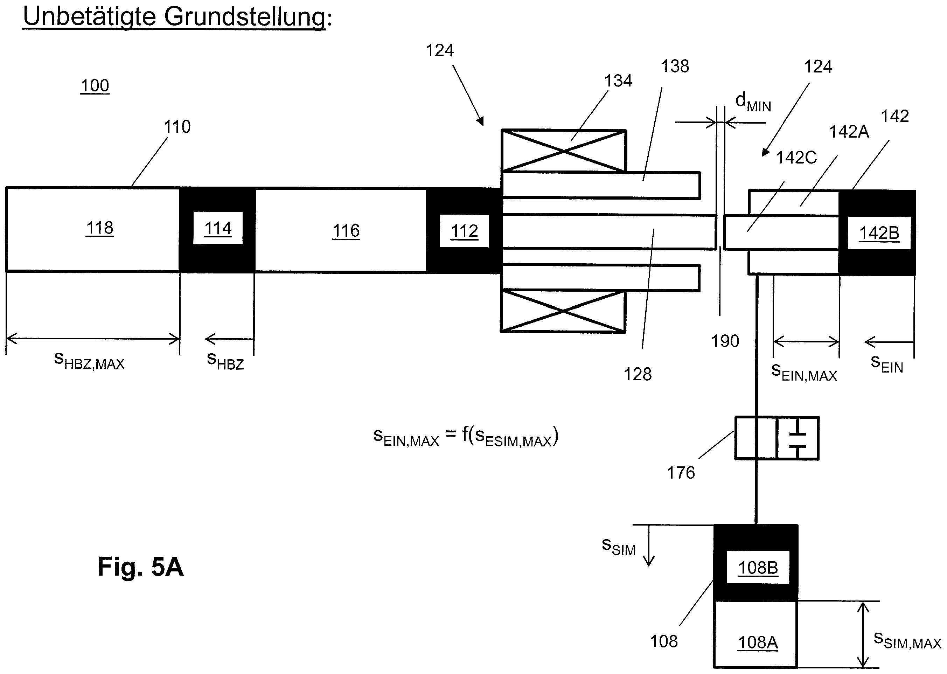

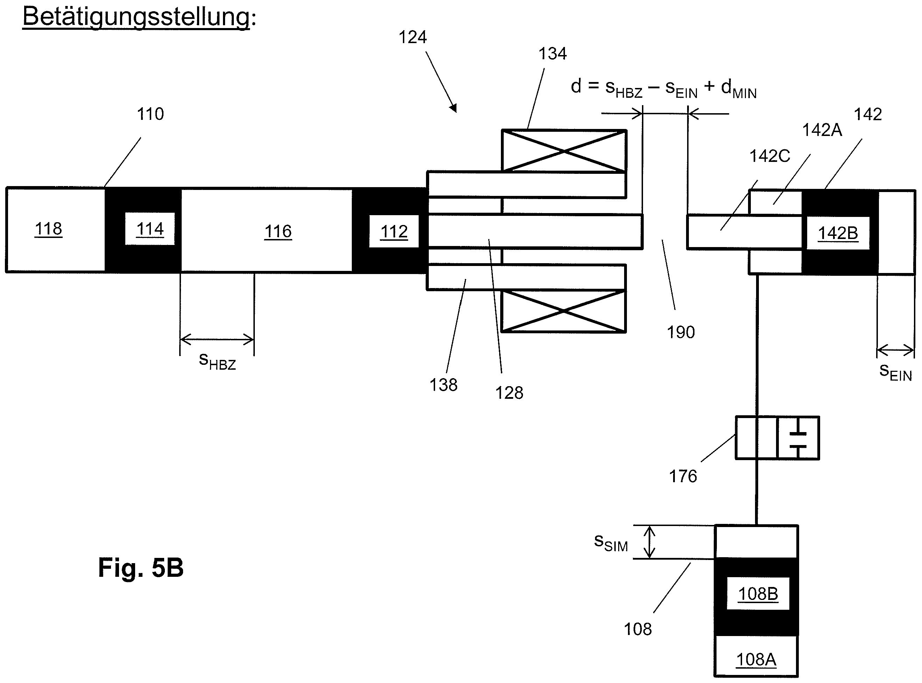

Auch bei den Ausführungsbeispielen gemäß den Fign. 3 und 4 ist eine Pedalwegabhängigkeit des Spalts 190 zwischen dem Kraftübertragungselement 128 einerseits und dem Kolbenfortsatz 142C andererseits gegeben. Nachfolgend werden unter Bezugnahme auf die schematischen Fign. 5A und 5B die Vorgänge beim Betätigen der Bremsanlage 100 in Fig. 3 oder 4 im Hinblick auf die Wegabhängigkeit einer Länge d des Spalts 190 ("Spaltlänge d") näher erläutert. Es versteht sich, dass die entsprechenden technischen Einzelheiten auch bei der Bremsanlage 100 gemäß Fig. 1 oder Fig. 2 implementierbar sind.

In den Fign. 5A und 5B sind die für eine Erläuterung der Wegabhängigkeit der Spaltlänge d maßgeblichen Komponenten der Bremsanlage 100 gemäß Fig. 3 oder 4 dargestellt. Fig. 5A veranschaulicht dabei die unbetätigte Grundstellung der Bremsanlage 100 im BBW-Modus (also bei unbetätigtem Bremspedal), während Fig.5B die Betätigungsstellung im BBW-Modus zeigt.

Wie in Fig. 5A veranschaulicht, ist der Spalt 190 zwischen einander zugewandten Stirnflächen des Kraftübertragungselements 128 einerseits und des Kolbenfortsatzes 142C andererseits ausgebildet. Im unbetätigten Grundzustand gemäß Fig. 5A weist die Spaltlänge d einen vorgegebenen Minimalwert d_{MIN} von ungefähr 1 mm auf.

Bei einer Bremspedalbetätigung wird der Kolben 142B im Zylinder 142A in Fig. 5A nach links verschoben und legt einen Weg S_{EIN} zurück. Im BBW-Modus ist das Ventil 176 zwischen dem Zylinder 142A und dem Zylinder 108A der Simulations-Einrichtung 108 dabei normalerweise geöffnet. Das bei einem Verschieben des Kolbens 142B aus der Kammer 142A verdrängte Hydraulikfluid kann somit in den Zylinder 108A verdrängt werden und verschiebt dabei den Kolben 108B in Fig. 5A entgegen einer Federkraft nach unten (vgl. Element 108C in den Fign. 3 und 4). Diese Federkraft bewirkt das für den Fahrer vertraute Pedalrückwirkverhalten.

Der Weg S_{EIN}, den der Kolben 142B im Zylinder 142A bei einer Bremspedalbetätigung zurücklegen kann, ist auf einen Maximalwert S_{EIN, MAX} von typischerweise 10 bis 20 mm (z. B. ungefähr 16 mm) begrenzt. Diese Begrenzung bewirkt auch eine Begrenzung des Bremspedalwegs.

Im Ausführungsbeispiel gemäß Fig. 5A ergibt sich die Begrenzung auf den Maximalwert s_{EIN}, _{MAX} aufgrund eines Anschlags im Zylinder 108A für den Kolben 108B, der den Weg s_{SIM} des Kolbens 108A auf einen Maximalwert s_{SIM, MAX} begrenzt. Zwischen den Maximalwerten s_{EIN, MAX} und s_{SIM, MAX} besteht ein funktionaler Zusammenhang, der durch das zwischen den beiden Zylindern 142A, 108A verschobene Volumen an Hydraulikfluid und die hydraulisch wirksamen Arbeitsflächen der beiden Kolben 142B, 108B vorgegeben ist.

Wie bereits oben erläutert, besteht die Möglichkeit, den Weg s_{EIN} auf einen geringeren Maximalwert als durch s_{SIM, MAX} festgelegt ist zu begrenzen. Diese Begrenzung geschieht durch Schließen des Ventils 176, bevor der Kolben 108B seinen Anschlag im Zylinder 108A erreicht (es wird hier angenommen, dass das aus dem Zylinder 142A verdrängte Hydraulikfluid nicht anderweitig entweichen kann, also beispielsweise die Ventile 174, 178 in den Fign. 3 und 4 geschlossen sind).

Die Begrenzung des Wegs s_{EIN} durch Schließen des Ventils 176 begrenzt somit den Pedalweg. Eine solche Pedalwegbegrenzung wird im vorliegenden Ausführungsbeispiel bei Einsetzen einer ABS-Regelung vorgenommen. Durch Verkürzen des Pedalwegs bei Schließen des Ventils 176 wird der Fahrer haptisch auf einen niedrigen Haftreibungswert der Fahrbahnoberfläche und das Einsetzen der ABS-Regelung aufmerksam gemacht. Dabei kann die Pedalwegbegrenzung umso schneller einsetzen (also der maximale Pedalweg umso kürzer sein), je niedriger der Haftreibwert ist. Dieses Pedalrückwirkverhalten ist dem Fahrer von herkömmlichen Bremsanlagen bekannt, die nicht auf dem BBW-Prinzip basieren.

Bei einer Betätigung des Bremspedals im BBW-Modus wird der elektromechanische Aktuator 124 angesteuert, um mittels der Spindel 138 auf den Primärkolben 112 im Hauptzylinder 110 einzuwirken, und damit auch auf den Sekundärkolben 114. Die Kolbenanordnung 112, 114 verschiebt sich daraufhin um einen Weg s_{HBZ} in Fig. 5A nach links (bzw. bei Loslassen des Bremspedals nach rechts). Der Weg s_{HBZ} ist ebenfalls auf einen Maximalwert s_{HBZ, MAX} von circa 35 bis 50 mm (z. B. etwa 42 mm) begrenzt. Diese Begrenzung ergibt sich aufgrund eines Anschlags im Hauptzylinder 110 für wenigstens einen der beiden Kolben 112, 114.

Wie bereits oben aufgeführt, ist das Kraftübertragungselement 128 fest oder lösbar (z. B. durch magnetische Kräfte) und mechanisch mit dem Primärkolben 112 gekoppelt. Eine Verschiebung des Primärkolbens 112 (und des Sekundärkolbens 114) im Hauptzylinder 110 bewirkt daher richtungs- und wegmäßig die gleiche Verschiebung des Kraftübertragungselements 128.

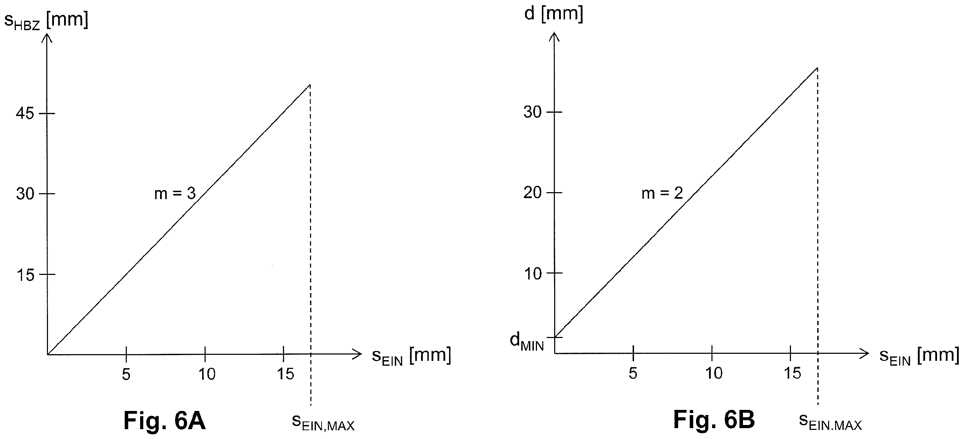

Die Ansteuerung des elektromechanischen Aktuators 124 erfolgt nun derart, dass zwischen s_{EIN} und s_{HBZ} ein bestimmtes Übersetzungsverhältnis definiert ist. Das Übersetzungsverhältnis ist im Ausführungsbeispiel > 1 gewählt und beträgt beispielsweise 1:3 (vgl. Fig. 6A). Aufgrund der starren Kopplung des Kraftübertragungselements 128 mit dem Primärkolben 112 sowie des Kolbenfortsatzes 142C mit dem Kolben 142B stellt sich dasselbe Übersetzungsverhältnis zwischen einem zurückgelegten Weg der dem Kraftübertragungselement 128 zugewandten Stirnfläche des Kolbenfortsatzes 142C und einem zurückgelegten Weg einer dem Kolbenfortsatz 142C zugeordneten Stirnfläche des Kraftübertragungselements 128 ein.

Das Übersetzungsverhältnis ist folglich derart gewählt, dass die Spaltlänge d mit Niedertreten des Bremspedals kontinuierlich zunimmt. Damit wird erreicht, dass das Kraftübertragungselement 128 sich schneller in Fig. 5B nach links bewegt als der Kolbenfortsatz 142C diesem nachfolgt. Es kann hier also von einer Übersetzung zwischen dem Weg s_{EIN} des Kolbens 142B und der Spaltlänge d die Rede sein, wobei das Übersetzungsverhältnis, wie in Fig. 6B gezeigt, ungefähr 2 beträgt (und allgemein zwischen 1:1,5 und 1:4 liegen kann).

Die mit Niedertreten des Bremspedals zunehmende Spaltlänge d ist aus Sicherheitsaspekten vorteilhaft, da mit zunehmendem Bremspedalweg eine "stärkere" mechanische Entkoppelung des Bremspedals von der Kolbenanordnung 112, 114 im Hauptzylinder 110 erreicht wird.

Die zunehmende Spaltlänge d ist auch aus einem anderen Gesichtspunkt heraus vorteilhaft. Wie bereits oben erläutert, kann es bei der Bremsanlage 100 gemäß Fig. 3 oder 4 in gewissen Situationen erforderlich werden, im Rahmen einer Betriebsbremsung (z. B. nach Einsetzen einer Fahrdynamikregelung) Hydraulikfluid aus dem Reservoir in den Hauptzylinder 110 nachzusaugen. Hierfür werden, wie bereits erläutert, die Fluidleitungen zu den Radbremsen geschlossen und die Nachfüllventile 170, 172 geöffnet. Ferner wird mittels des elektromechanischen Aktuators 124 ein Rückhub der Kolben 112, 114 eingeleitet, um Hydraulikfluid aus dem Reservoir in die Hydraulikkammern 116, 118 anzusaugen. Infolge des Rückhubs bewegt sich die Kolbenanordnung 112, 114, und damit auch das Kraftübertragungselement 128, in Fig. 3 nach rechts.

Aufgrund der vergleichsweise großen Spaltlänge d = s_{HBZ} - s_{EIN} + s_{MIN} kann ein signifikanter Rückhub (und damit eine signifikante Volumenaufnahme an Hydraulikfluid im Hauptzylinder 110) erfolgen, ohne dass das Kraftübertragungselement 128 durch Überwindung des Spalts 190 an den Kolbenfortsatz 142C anstoßen würde. Eine unerwünschte haptische Rückmeldung am Bremspedal lässt sich auf diese Weise vermeiden. Gleichzeitig ist sichergestellt, dass in der unbetätigten Grundstellung eine nur geringe Spaltlänge d_{MIN} vorhanden ist. Sollte also in den PT-Modus geschaltet werden müssen, lässt sich der Spalt 190 der Länge d_{MIN} schnell überwinden, was zu einer weitgehend verzögerungsfreien Kopplung des Kolbenfortsatzes 142C mit dem Kraftübertragungselement 128 führt.

In den Ausführungsbeispielen gemäß den Fign. 3, 4, 5A und 5B ist der Spalt 190 zwischen dem Kraftübertragungselement 128 und dem Kolbenfortsatz 142C vorgesehen. Es ist darauf hinzuweisen, dass in anderen Ausführungsformen der Spalt auch an einer anderen Stelle im Kraftübertragungsweg zwischen dem Bremspedal 130 und der Hauptzylinder-Kolbenanordnung 112, 114 vorgesehen werden könnte. Beispielsweise ist es denkbar, den Kolbenfortsatz 142C und das Kraftübertragungselement 128 als eine einzige, spaltfreie Komponente auszubilden. In diesem Fall könnte dann ein Spalt zwischen der dem Bremspedal zugewandten Stirnseite des Primärkolbens 112 und der dem Primärkolben 112 zugewandten Stirnfläche des integrierten Elements 128, 142C vorgesehen sein.

## Patentansprüche

1. Elektrohydraulische Kraftfahrzeug-Bremsanlage (100), umfassend
einen Hauptzylinder (110);
einen elektromechanischen Aktuator (124) zur Betätigung eines im Hauptzylinder (110) aufgenommenen ersten Kolbens (112; 114) in einem "Brake-By-Wire", BBW-, Modus der Bremsanlage (100);
einen mittels eines Bremspedals (130) betätigbaren mechanischen Aktuator (126) zur Betätigung des ersten Kolbens (112; 114) in einem "Push-Through", PT-, Modus der Bremsanlage (100),
wobei im BBW-Modus ein Spalt (190) mit einer Spaltlänge (d) in einem Kraftübertragungsweg zwischen dem Bremspedal (130) und dem ersten Kolben (112; 114) vorhanden ist, um das Bremspedal (130) vom ersten Kolben (112; 114) zu entkoppeln, und wobei die Bremsanlage (100) derart konfiguriert ist, dass im BBW-Modus die Spaltlänge (d) eine Abhängigkeit von einem Pedalweg des Bremspedals (130) aufweist,
wobei
die Spaltlänge (d) mit einem Niedertreten des Bremspedals (130) zunimmt.

2. Bremsanlage nach Anspruch 1, wobei
die Abhängigkeit der Spaltlänge (d) vom Pedalweg durch ein Übersetzungsverhältnis definiert ist zwischen einem zurückgelegten Weg einer pedalseitigen Begrenzung des Spalts (190) und einem zurückgelegten Weg einer kolbenseitigen Begrenzung des Spalts (190), wobei
das Übersetzungsverhältnis vorzugsweise im Bereich zwischen ungefähr 1:1,25 und 1:6 liegt.

3. Bremsanlage nach einem der vorhergehenden Ansprüche, wobei
der Spalt (190) zwischen einer ersten Stirnfläche des ersten Kolbens (112; 114) oder eines mit dem ersten Kolben (112; 114) bewegbaren ersten Betätigungselements (128) einerseits und einer zweiten Stirnfläche eines mit dem Bremspedal (130) gekoppelten zweiten Betätigungselements (142C) andererseits begrenzt ist.

4. Bremsanlage nach Anspruch 3, wobei
im PT-Modus die erste Stirnfläche und die zweite Stirnfläche unter Überwindung des Spalts (190) in Anlage bringbar sind, um den ersten Kolben mittels des Bremspedals (130) zu betätigen.

5. Bremsanlage nach einem der vorhergehenden Ansprüche, wobei
die Abhängigkeit der Spaltlänge (d) vom Pedalweg durch eine pedalwegabhängige und/oder eine pedalkraftabhängige Ansteuerbarkeit des elektromechanischen Aktuators (124) realisiert ist.

6. Bremsanlage nach einem der vorhergehenden Ansprüche, wobei
der elektromechanische Aktuator (124) derart ansteuerbar ist, dass der erste Kolben (112; 114) bei einem Niedertreten des Bremspedals (130) schneller mittels des elektromechanischen Aktuators (124) verfahren wird, als eine bremspedalseitige Begrenzung des Spalts (190) dem ersten Kolben (112; 114) nacheilt.

7. Bremsanlage nach einem der vorhergehenden Ansprüche, wobei
der elektromechanische Aktuator (124) ansteuerbar ist, um bei zumindest teilweise durchgetretenem Bremspedal (130) eine Rückhub des ersten Zylinders (112; 114) in Richtung auf das Bremspedal (130) zu bewirken, wobei
der Rückhub vorzugsweise einem Ansaugen von Hydraulikfluid aus einem Reservoir (120) in den Hauptzylinder (110) dient.

8. Bremsanlage nach einem der vorhergehenden Ansprüche, wobei
ein Hydraulikzylinder (142A) mit einem darin aufgenommenen zweiten Kolben (142B) vorgesehen ist, wobei das Bremspedal (130) mit dem zweiten Kolben (142B) gekoppelt ist, um bei einem Niedertreten des Bremspedals (130) Hydraulikfluid aus dem Hydraulikzylinder (142A) zu verdrängen.

9. Bremsanlage nach Anspruch 8, wobei
der zweite Kolben (142B) starr mit einem eine pedalseitige Begrenzung des Spalts (190) bildenden Betätigungselement (142C) gekoppelt ist.

10. Bremsanlage nach Anspruch 8 oder 9, wobei
wobei eine hydraulische Simulationseinrichtung (108) für ein Pedalrückwirkverhalten vorgesehen ist, die zur Aufnahme von aus dem Hydraulikzylinder (142) verdrängtem Hydraulikfluid ausgebildet ist.

11. Bremsanlage nach einem der Ansprüche 8 bis 10, wobei
zwischen dem Hydraulikzylinder (142A) und der Simulationseinrichtung (108) ein Absperrventil (176) vorgesehen ist.

12. Bremsanlage nach Anspruch 11, wobei
zur Pedalwegbegrenzung mittels des Absperrventils (176) der Hydraulikzylinder (142A) von der Simulationseinrichtung (108) abtrennbar ist.

13. Verfahren für das Betreiben einer elektrohydraulischen Kraftfahrzeug-Bremsanlage (100) mit einem Hauptzylinder (110), einem elektromechanischen Aktuator (124) zur Betätigung eines im Hauptzylinder (110) aufgenommenen ersten Kolbens (112; 114) in einem "Brake-By-Wire", BBW-, Modus der Bremsanlage (100) und einem mittels eines Bremspedals (130) betätigbaren mechanischen Aktuator (126) zur Betätigung des ersten Kolbens (112; 114) in einem "Push-Through", PT-, Modus der Bremsanlage (100), wobei im BBW-Modus ein Spalt (190) mit einer Spaltlänge (d) in einem Kraftübertragungsweg zwischen dem Bremspedal (130) und dem ersten Kolben (112; 114) vorhanden ist, um das Bremspedal (130) vom ersten Kolben (112; 114) zu entkoppeln, umfassend den Schritt:
Einstellen, im BBW-Modus, der Spaltlänge (d) in Abhängigkeit von einem Pedalweg des Bremspedals (130), derart, dass die Spaltlänge (d) mit einem Niedertreten des Bremspedals (130) zunimmt.

14. Computerprogrammprodukt mit Programmcodemitteln die das Verfahren nach Anspruch 13 durchführen, wenn das Computerprogrammprodukt auf wenigstens einem Prozessor abläuft.

15. Kraftfahrzeug-Steuergerät oder -Steuergerätesystem, umfassend das Computerprogrammprodukt nach Anspruch 14.

## Claims

1. Electrohydraulic motor-vehicle brake system (100) comprising
a master cylinder (110);
an electromechanical actuator (124) for actuating a first piston (112; 114) received in the master cylinder (110) in a brake-by-wire (BBW) mode of the brake system (100);
a mechanical actuator (126), capable of being actuated by means of a brake pedal (130), for actuating the first piston (112; 114) in a push-through (PT) mode of the brake system (100),
wherein in the BBW mode a gap (190) with a gap length (d) is present in a force-transmitting path between the brake pedal (130) and the first piston (112; 114) in order to decouple the brake pedal (130) from the first piston (112; 114), and wherein the brake system (100) is configured in such a manner that in the BBW mode the gap length (d) exhibits a dependence on a pedal travel of the brake pedal (130),
wherein
the gap length (d) increases with a depression of the brake pedal (130).

2. Brake system according to Claim 1, wherein
the dependence of the gap length (d) on the pedal travel is defined by a transmission ratio between a distance travelled by a pedal-side boundary of the gap (190) and a distance travelled by a piston-side boundary of the gap (190),
wherein
the transmission ratio lies preferably within the range between about 1:1.25 and 1:6.

3. Brake system according to one of the preceding claims, wherein
the gap (190) is bounded between a first end face of the first piston (112; 114) or of a first actuating element (128) capable of being moved with the first piston (112; 114), on the one side, and a second end face of a second actuating element (142C) coupled with the brake pedal (130), on the other side.

4. Brake system according to Claim 3, wherein
in the PT mode the first end face and the second end face are capable of being brought into abutment, overcoming the gap (190), in order to actuate the first piston by means of the brake pedal (130).

5. Brake system according to one of the preceding claims, wherein
the dependence of the gap length (d) on the pedal travel is realised by a pedal-travel-dependent and/or a pedal-force-dependent drive capability of the electromechanical actuator (124).

6. Brake system according to one of the preceding claims, wherein
the electromechanical actuator (124) is capable of being driven in such a manner that in the event of a depression of the brake pedal (130) the first piston (112; 114) is traversed more quickly by means of the electromechanical actuator (124) than a brake-pedal-side boundary of the gap (190) lagging behind the first piston (112; 114).

7. Brake system according to one of the preceding claims, wherein
the electromechanical actuator (124) is capable of being driven in order to bring about, when the brake pedal (130) is at least partially depressed, a return stroke of the first cylinder (112; 114) in the direction towards the brake pedal (130), wherein
the return stroke preferably serves for a suction of hydraulic fluid out of a reservoir (120) into the master cylinder (110).

8. Brake system according to one of the preceding claims, wherein
a hydraulic cylinder (142A) with a second piston (142B) received therein is provided, wherein the brake pedal (130) is coupled with the second piston (142B) in order in the event of a depression of the brake pedal (130) to displace hydraulic fluid out of the hydraulic cylinder (142A).

9. Brake system according to Claim 8, wherein
the second piston (142B) is rigidly coupled with an actuating element (142C) forming a pedal-side boundary of the gap (190).

10. Brake system according to Claim 8 or 9, wherein
a hydraulic simulation device (108) for a pedal-reaction response is provided, which has been designed to accommodate hydraulic fluid displaced out of the hydraulic cylinder (142).

11. Brake system according to one of Claims 8 to 10, wherein
a stop valve (176) is provided between the hydraulic cylinder (142A) and the simulation device (108).

12. Brake system according to Claim 11, wherein
for the purpose of pedal-travel limitation by means of the stop valve (176), the hydraulic cylinder (142A) is separable from the simulation device (108).

13. Method for operating an electrohydraulic motor-vehicle brake system (100) with a master cylinder (110), an electromechanical actuator (124) for actuating a first piston (112; 114) received in the master cylinder (110) in a brake-by-wire (BBW) mode of the brake system (100) and a mechanical actuator (126), capable of being actuated by means of a brake pedal (130), for actuating the first piston (112; 114) in a push-through (PT) mode of the brake system (100), wherein in the BBW mode a gap (190) with a gap length (d) is present in a force-transmitting path between the brake pedal (130) and the first piston (112; 114) in order to decouple the brake pedal (130) from the first piston (112; 114), comprising the step of:
setting, in the BBW mode, the gap length (d) as a function of a pedal travel of the brake pedal (130) in such a manner that the gap length (d) increases with a depression of the brake pedal (130).

14. Computer program product with program code means, which implement the method according to Claim 13 when the computer program product is running on at least one processor.

15. Motor-vehicle control unit or motor-vehicle control-unit system including the computer program product according to Claim 14.

## Revendications

1. Système de freinage électrohydraulique de véhicule automobile (100), comprenant
un maître-cylindre (110) ;
un actionneur électromécanique (124) pour actionner un premier piston (112 ; 114) logé dans le maître-cylindre (110) dans un mode « Brake-By-Wire », BBW, du système de freinage (100) ;
un actionneur mécanique (126) pouvant être actionné au moyen d'une pédale de frein (130) pour actionner le premier piston (112 ; 114) dans un mode « Push-Through », PT, du système de freinage (100),
dans lequel une fente (190) d'une longueur de fente (d) est présente en mode BBW dans un trajet de transmission de force entre la pédale de frein (130) et le premier piston (112 ; 114) pour désaccoupler la pédale de frein (130) du premier piston (112 ; 114), et dans lequel le système de freinage (100) est configuré de telle façon qu'en mode BBW la longueur de fente (d) présente une dépendance d'une course de pédale de la pédale de frein (130),
dans lequel la longueur de fente (d) augmente avec un enfoncement de la pédale de frein (130).

2. Système de freinage selon la revendication 1, dans lequel
la dépendance de la longueur de fente (d) de la course de pédale est définie par un rapport de transmission entre une course parcourue d'une limitation côté pédale de la fente (190) et une course parcourue d'une limitation côté piston de la fente (190), dans lequel
le rapport de transmission est de préférence approximativement compris entre 1:1,25 et 1:6.

3. Système de freinage selon l'une des revendications précédentes, dans lequel
la fente (190) est limitée entre une première face frontale du premier piston (112 ; 114) ou d'un premier élément d'actionnement (128) mobile avec le premier piston (112 ; 114) d'une part et une deuxième face frontale d'un deuxième élément d'actionnement (142C) accouplé à la pédale de frein (130) d'autre part.

4. Système de freinage selon la revendication 3, dans lequel
en mode PT, la première face frontale et la deuxième face frontale peuvent être amenées en contact en surmontant la fente (190) pour actionner le premier piston au moyen de la pédale de frein (130).

5. Système de freinage selon l'une des revendications précédentes, dans lequel
la dépendance de la longueur de fente (d) de la course de pédale est réalisée par une possibilité de commande de l'actionneur électromécanique (124) en fonction de la course de pédale et/ou en fonction de la force de pédale.

6. Système de freinage selon l'une des revendications précédentes, dans lequel
l'actionneur électromécanique (124) peut être commandé de telle façon que, lors d'un enfoncement de la pédale de frein (130), le premier piston (112 ; 114) soit déplacé plus vite au moyen de l'actionneur électromécanique (124) qu'une limitation côté pédale de frein de la fente (190) poursuivant le premier piston (112 ; 114).

7. Système de freinage selon l'une des revendications précédentes, dans lequel
l'actionneur électromécanique (124) peut être commandé pour provoquer une course de retour du premier cylindre (112 ; 114) en direction de la pédale de frein (130) lorsque la pédale de frein (130) est enfoncée au moins partiellement, dans lequel
la course de retour sert de préférence à aspirer du fluide hydraulique d'un réservoir (120) dans le maître-cylindre (110).

8. Système de freinage selon l'une des revendications précédentes, dans lequel
un cylindre hydraulique (142A) comprenant un deuxième piston (142B) logé dans celui-ci est prévu, la pédale de frein (130) étant accouplée au deuxième piston (142B) pour, lors d'un enfoncement de la pédale de frein (130), refouler du fluide hydraulique du cylindre hydraulique (142A).

9. Système de freinage selon la revendication 8, dans lequel
le deuxième piston (142B) est accouplé rigidement à un élément d'actionnement (142C) formant une limitation côté pédale de la fente (190).

10. Système de freinage selon la revendication 8 ou 9, dans lequel
un dispositif de simulation hydraulique (108) pour un comportement de réaction de pédale est prévu, qui est conçu pour recevoir le fluide hydraulique refoulé du cylindre hydraulique (142).

11. Système de freinage selon l'une des revendications 8 à 10, dans lequel
une vanne d'arrêt (176) est prévue entre le cylindre hydraulique (142A) et le dispositif de simulation (108).

12. Système de freinage selon la revendication 11, dans lequel
le cylindre hydraulique (142A) est séparable du dispositif de simulation (108) au moyen de la vanne d'arrêt (176) pour limiter la course de la pédale.

13. Procédé de fonctionnement d'un système de freinage électrohydraulique de véhicule automobile (100) comprenant un maître-cylindre (110), un actionneur électromécanique (124) pour actionner un premier piston (112 ; 114) logé dans le maître-cylindre (110) dans un mode « Brake-By-Wire », BBW, du système de freinage (100) et un actionneur mécanique (126) pouvant être actionné au moyen d'une pédale de frein (130) pour actionner le premier piston (112 ; 114) dans un mode « Push- Through », PT, du système de freinage (100), dans lequel une fente (190) d'une longueur de fente (d) est présente en mode BBW dans un trajet de transmission de force entre la pédale de frein (130) et le premier piston (112 ; 114) pour désaccoupler la pédale de frein (130) du premier piston (112 ; 114), ledit procédé comprenant l'étape de :
réglage, en mode BBW, de la longueur de fente (d) en fonction d'une course de pédale de la pédale de frein (130), de telle façon que la longueur de fente (d) augmente avec un enfoncement de la pédale de frein (130).

14. Produit programme d'ordinateur avec des moyens de codage de programme qui mettent en oeuvre le procédé selon la revendication 13, lorsque le produit programme d'ordinateur est exécuté sur au moins un processeur.

15. Module de commande ou système de modules de commande de véhicule automobile, comprenant le produit programme d'ordinateur selon la revendication 14.
